# EUROPEAN PATENT APPLICATION

(11) **EP 3 889 907 A1**
(43) Date of publication of application: **06.10.2021**
(21) Application number: 20167901.6
(22) Date of filing: 03.04.2020
(51) Int. Cl.: G06T 7/62, A01C 7/10, G06T 7/80, G06K 9/00, G06K 9/32, G06K 9/36

(54) **METHOD AND MEASUREMENT SYSTEM FOR DETERMINING A BULK MATERIAL**

(71) Applicant: Kverneland Group Nieuw-Vennep BV, 2153 LR Nieuw-Vennep (NL)
(72) Inventor: DE BOER, Bart, 2153 LR Niew-Vennep (NL)
(74) Representative: Bittner, Thomas L.

(57) **Abstract**

The present disclosure refers to a method for determining a bulk material such as fertilizer, seed or the like, the method comprising: providing a bulk material (2) to be distributed such as fertilizer, seed or the like by a distribution machine; providing a measurement tool (1) having an optical landmark (7) on a front side of the measurement tool (1); providing the measurement tool (1) in a measurement position in which the bulk material (2) is provided in proximity to the measurement tool (1); providing a camera device (3) configured to detect images; detecting image data by the camera device (3), the image data indicative of an image of the front side of the measurement tool (1) provided in the measurement position and the bulk material (2) provided in proximity to the measurement tool (1); and determining characteristics of the bulk material (2) from image data analysis of the image data. In the one or more processors, the determining comprises: determining the optical landmark (7) from the image data; in response to determining the optical landmark (7), providing dimensional data assigned to and indicative of dimensional characteristics of the optical landmark (7); and determining characteristics of the bulk material (2) taking into account the dimensional characteristics. Further, a measurement system for determining a bulk material is provided. (Fig. 1)

## Description

The present disclosure refers to a method and a measurement system for determining a bulk material such as fertilizer, seed or the like.

### Background

In the field of agricultural bulk material such as fertilizer, seed or the like are distributed on the field by a distribution machine. The bulk material is provided in a container of the distribution machine for distributing. Different bulk materials may be provided with different characteristics such as size or density of particles of the bulk material. But also, different badges of the same bulk material may have different characteristics because of differences in the production process. Knowledge about different characteristics of the particles of the bulk material may help in optimizing operation of the distribution machine.

In document DE 10 2017 102 013 A1 a mat is disclosed which is applied for determining distribution characteristics of particles of a bulk material distributed by a distribution machine. A plurality of mats is placed on the ground to which the bulk material will be distributed. Characteristics of the distribution of the bulk material are determined by an imaging method processing image data of the mats after the bulk material has been distributed.

### Summary

It is an object to provide a method and a measurement system for determining a bulk material such a fertilizer, seed or the like which allow for reliable determination of characteristics of the bulk material with minimized effort.

For solving the problem a method for determining a bulk material such as fertilizer, seed or the like according to the independent claim 1 is provided. Further, a measurement system for determining a bulk material such as fertilizer, seed or the like according to the independent claim 12 is provided. Additional aspects are disclosed in the dependent claims.

According to one aspect, a method for determining a bulk material such as fertilizer, seed or the like is provided, the method comprising: providing a bulk material to be distributed such as fertilizer, seed or the like by a distribution machine; providing a measurement tool having an optical landmark on a front side of the measurement tool; providing the measurement tool in a measurement position in which the bulk material is provided in proximity to the measurement tool; providing a camera device configured to detect images; detecting image data by the camera device, the image data indicative of an image of the front side of the measurement tool provided in the measurement position and the bulk material provided in proximity to the measurement tool; and determining characteristics of the bulk material from image data analysis of the image data. In one or more processors, the determining of the characteristics is further comprising: determining the optical landmark from the image data; in response to determining the optical landmark, providing dimensional data assigned to and indicative of dimensional characteristics of the optical landmark; and determining characteristics of the bulk material taking into account the dimensional characteristics.

According to another aspect, a measurement system for determining a bulk material such as fertilizer, seed or the like is provided, the measurement system comprising: a measurement tool; a camera device; and one or more processors. The measurement system is configured to: provide the measurement tool in a measurement position in which the bulk material is provided in proximity to the measurement tool; detect image data by the camera device, the image data indicative of an image of the measurement tool provided in the measurement position, and the bulk material provided in proximity to the measurement tool; and, in the one or more processors, determine characteristics of the bulk material from image data analysis of the image data. The one or more processors are further configured to: determine the optical landmark from the image data; in response to determining the optical landmark, provide dimensional data assigned to and indicative of dimensional characteristics of the optical landmark; and determine characteristics of the bulk material taking into account the dimensional characteristics.

The technology proposed provides the option for reliable determining the bulk material with minimized effort. The measurement tool is placed in proximity to the bulk material, for example, in front of the bulk material. In an embodiment, the measurement tool may be placed on the bulk material. Following, the image data are detected by the camera device. The digital image data are processed by one or more processors provided, for example, in a mobile device for determining characteristics of the bulk material. In an embodiment, characteristics of particles of the bulk material may be determined. The camera device and the one or more processors may be provided by a mobile phone or some other mobile device such as laptop or tablet computer.

The measurement toll may be provided with only one (single) optical landmark or a plurality (more than one) of optical landmarks.

The determining of the optical landmark(s) may comprise determining an individual identity of each of the optical landmarks provided on the measurement tool.

Dimensional data may be provided for a plurality of different measurement tools in the one or more processors. The determining of the optical landmark(s) may comprise determining an identity of the measurement tool actually applied. Based on the identity information assigned to the measurement tool applied, dimensional data assigned to the optical landmark(s) of the measurement tool having such tool identity may be determined in the one or more processors.

The different information or data may be applied in the process of determining the characteristics of the bulk material from the image data analysis.

The measurement tool provides a reference tool (such as a reference frame) supporting image data analysis conducted for the image data detected by the camera device.

The bulk material may also be referred to spreading material to be distributed by an agricultural spreader or distribution machine.

With respect to the positioning the measurement tool and the bulk material to be detected with the camera device, both may be positioned tin a common (the same) plane.

The determining may comprise determining dimensional characteristics of the bulk material.

The determining may comprise determining characteristics of particles of the bulk material. Characteristics of the particles of the bulk material may comprise at least one of the following: particle density, particle shape, and type of bulk material. One or more of such characteristics are determined in the process of determining characteristics of the bulk material from the image data analysis. With respect to the type of bulk material, one or more types of particles may be determined.

The determining may comprise determining dimensional characteristics of the particles of the bulk material. Dimensional characteristics of the particles may refer to at least one of particles size and particle diameter. For example, particles having different size and / or different diameter may be identified from the image data analysis. This may provide the information to the user that there is no homogeneous bulk material regarding such particle characteristics. If, for example, two different types of particles are mixed in the bulk material, the dimensional characteristics determined from the image data analysis may provided prove of having the required mixture of particles.

The bulk material may be provided in a container of a distribution machine. The measurement tool may be placed on the bulk material received in the container of the distribution machine, thereby, determining characteristics of bulk material actually provided for distribution. For this and other examples, characteristics data being indicative of the characteristics of the bulk material determined from the image data analysis may be generated and provided to a control device of the distribution machine, thereby, controlling operation of the distribution machine independents on the characteristics of the bulk material to be distributed. For example, depending on the characteristics of the bulk material rotational speed of one or more disk of a disk spreader may be controlled. Another parameter of disk spreader refers to the drop point of the particles on the disk. Also, such operation parameter may be controlled in dependence on the characteristics determined from the image data analysis.

The method may further comprise providing a measurement tool having an arrangement of optical landmarks on an edge part of the measurement tool (on the front side).

Different optical landmarks provided on the edge part of the measurement tool may have assigned different identity. In this and other embodiments, identity data may be provided in the one or more processors, the identity data being indicative of a plurality of optical landmarks having assigned different identities. If the identity of the optical landmark is determined, such information may be used for determining characteristics of the optical landmark in the one or more processors. For example, based on the identity information, location information for the optical landmark having such identity may be derived, the location information being indicative of details of the location of the optical landmark on the edge part of the measurement tool.

The method may further comprise: providing a measurement tool having an opening, wherein the arrangement of optical landmark is provided on the edge part encompassing the opening at least in part; and the bulk material provided on the back side of the measurement tool occupying, in the image of the front side of the measurement tool, an image subarea assigned to the opening. The opening of the measurement tool may be provided with a square shape such as a quadratic shape.

With respect to the determining of dimensional characteristics of the bulk material, the dimensional characteristics of the bulk material may be indicative of the extent to which the bulk material is occupying the opening of the measurement tool in the image of the front side of the measurement tool taken by the camera device.

The providing of the dimensional data may comprises providing dimensional data indicative of landmark distance characteristics of the optical landmarks from the arrangement of optical landmarks, such as, for example, of landmark distance between optical landmarks. Distances along a side of the edge part and / or along lines crossing the opening of the measurement tool may be provided.

The providing of the dimensional data may comprise providing dimensional data indicative of at least one of a size of the opening and a diameter of the opening. Such dimensional data can be taken into account in the process of determining the characteristics of the bulk material from the image data analysis. The dimensional data may comprise information indicative of a shape of the opening.

The providing may comprises providing a mobile device having the one or more processors and the camera device.

The method may further comprise the following: providing a time of flight sensor device; detecting distance data while the image data are detected, the distance data being indicative of a distance between the camera device and the measurement tool; in the one or more processors, determining the distance between the camera device and the measurement tool from the distance data; and determining the characteristics of the bulk material taking into account the distance between the camera device and the measurement tool from the distance data. By means of the time of flight sensor device distance data is collected which is indicative of the distance from the camera device to the measurement tool and the bulk material on the backside of the measurement tool, respectively. Thereby, image data with image depth information can be provided. The flight of time sensor device, for example, may be provided together with the camera device in a mobile device such as a mobile phone or a tablet computer.

The one or more landmarks, in an embodiment, can be provided by so-called Aruco-landmarks which provide for maturity of the libraries and low cost of processing. Processing of such landmarks can be conducted very fast and reliable. They also provide perspective data because of their simple to detect square shape.

With respect to the measurement system, the different embodiments described for the method for determining the bulk material such as fertilizer, seed or the like above may apply *mutatis mutandis.*

In the process of determining the characteristics of the bulk material from the image data analysis one or more software applications running on the one or more processors may be applied. Software applications for (digital) image data analysis known as such may be applied. The software application would determine characteristics of the bulk material either based on the image data or a combination of the image data and the distance data providing for depth information with respect to the image.

The determining the characteristics of the bulk material may comprise applying a neural network. The neural network may be trained by training data comprising a plurality of digital image data provided for different types of bulk material. Alternatively, other computer models reflecting some relationship between digital image data and bulk material parameter may be applied. The one or more processors will apply the neural network and / or some other computer model for determining the characteristics of the bulk or spreading material. A combination of algorithm(s) and a database may be applied by the computer model or the neural network. The database may be filled with settings determined experimentally before.

Data indicative of the characteristics of the bulk material determined my be transmitted from the one or processors to a control device of an agricultural spreader machine where the data can be processed for generating control signals in response, the control signals to be applied for controlling operation of the spreader machine automatically.

### Description of embodiments

Following, further embodiments are described with reference to figures. In the figures, show:
- Fig. 1: a schematic representation of an arrangement with a measurement system for determining a bulk material such as fertilizer, seed or the like;
- Fig. 2: a schematic representation of a measurement tool provided with an edge part and encompassing an opening and optical landmarks placed on the edge part; and
- Fig. 3: a schematic representation of another measurement tool provided with a single optical landmark.

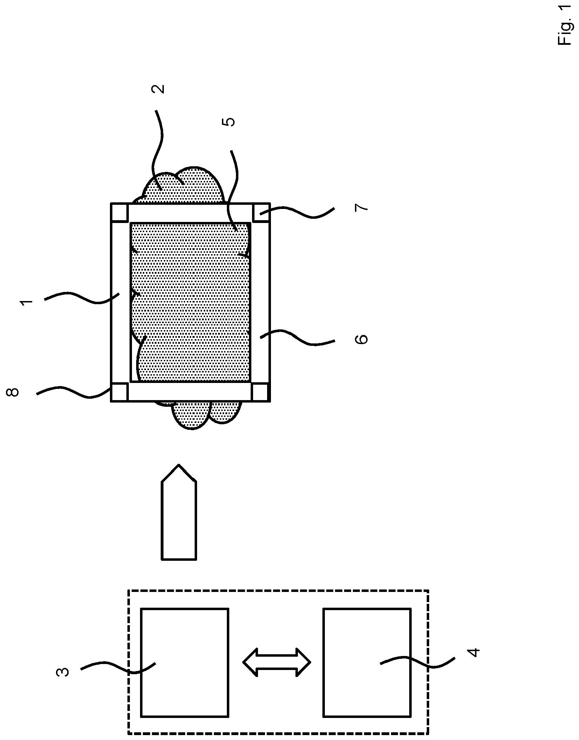

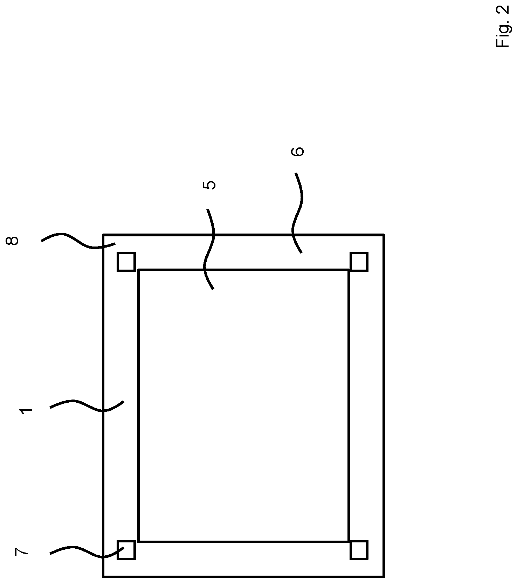

Fig. 1 shows a schematic representation of an arrangement provided with a measurement tool 1, a bulk material 2 such as fertilizer, seed or the like, a camera device 3, and a data processing system 4 having one or more processors for data processing. Fig. 2 shows a schematic representation of a front side of the measurement tool 1 provided with an opening 5 and an edge part 6 encompassing the opening 5. Optical landmarks 7 are provided in corner sections 8 of the edge part 6. In the embodiment shown, the optical landmarks 7 are provided as so-called ArUco-landmarks. Aruco-landmarks provide for maturity of the libraries and low cost of processing. Processing of such landmarks can be conducted very fast and reliable. They also provide perspective data because of their simple to detect square shape. Other optical landmarks known as such may be provided instead.

The camera device 3 and the data processing system 4 may be provided in a common device housing or in separate housings. For example, the camera device 3 and the data processing system 4 may be implemented by a mobile phone or some other mobile device such as laptop or tablet computer. Alternatively, image data detected by the camera device may be transmitted to the data processing system located remotely from the location of the camera device 3.

For determining the characteristics of the bulk material 2, image data are detected by the camera device 3 when the measurement tool 1 is provided in a measurement position. The measurement position is characterized by having the measurement tool 1 placed in front of the bulk material 2 and the camera device 3 facing the front side of the measurement tool 1, the bulk material 2 on the backside of the measurement tool 1 occupying the opening 3 in the scene presented to the camera device 2.

Image data indicative of one or more images detected by the camera device 3 are processed by an image data analysis conducted in the data processing system 4. In the process of image data analysis, the optical landmarks 7 are determined. In response, characteristics of the bulk material 2 are determined taking into account the information about the optical landmarks.

With respect to characteristics of the bulk material 2, one or more of the following characteristics may be determined: size of particles of the bulk material 2, and diameter of the particles.

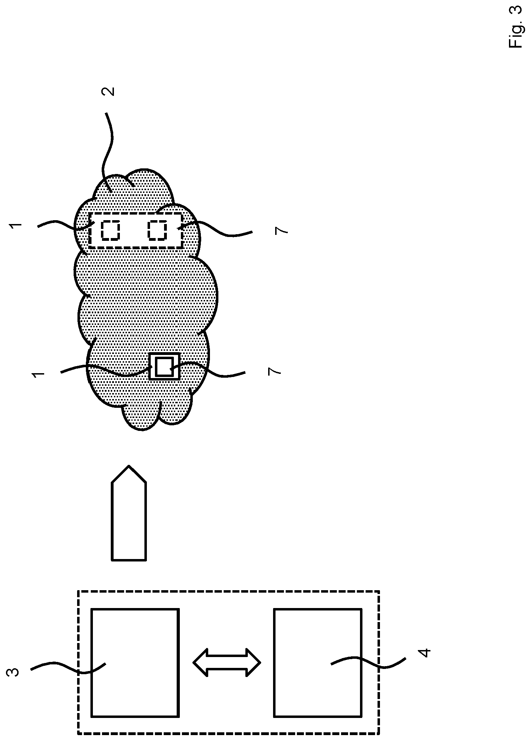

Fig. 3 shows a schematic representation of alternative examples for the measurement tool 1. The exemplary measurement tools 1 depicted are provided with one or two optical landmarks 7. In the images taken by the camera device only one or both measurement tools 1 may be present. The method for determining the characteristics of the bulk material 2 described above applies *mutatis mutandis.*

The optical landmark(s) 7 itself can contain enough information (dimensional characteristics). For a square landmark like the ArUco landmarks it is easy to get the position of the four corners on the image. The relative location of the corners the optical landmark 7 from each other may be known. The four corners of a single optical landmark 7 contain enough information for determining a homography transformation matrix. Homography refers to the relation between two images. One image is the image taken with the camera device 3 for the optical landmarks 7 and surroundings, and the other image is the known image of the optical landmark. The homographic matrix may be a 3x3 matrix containing factors required to map any pixel from the image made by the user to the known plane on which the optical landmarks 7 exist. Applying the homography to transform the image onto the flat image plane is called image rectification. It corrects the perspective and at the same time corrects for most problems arising from the use of different cameras under different conditions.

Perspective information is important. For example, mobile phones and camera devices can have different field of views, resolutions and quality. Also the user cannot be instructed to hold the camera device 3 perfectly parallel above the bulk material 2. Particles of the bulk material close to the camera device 3 would appear bigger then particles further away. For determining the actual size and / or diameter of the particles it is important to get such perspective transformation reversed.

Using the measurement tool 1 provided with a plurality of optical landmarks 7 (see Fig. 2) may provide for a more robust process for determining the bulk material 2. Every optical landmark 7 gives four known reference points, so optical landmarks 7 results in 16 reference points. The more reference points are available, the more reliable is it to find the homography. A RANSAC method (RANSAC - RANdom SAmple Consensus) may be applied to get an even more accurate homography matrix.

Coloured optical landmarks may be applied. This may allow for correction of colour distortion in the images taken by the camera device 3.

In an example, the following steps may be applied:
1. Taking images of the bulk material 2 with reference the measurement tool 1 on top with the camera device 3 (e.g. a mobile device or tablet);
2. (Either step 2. or 4.) Applying correction for perspective and scale based on the optical landmarks 7 by the one or more processors provided e.g. in the mobile device or the tablet;
3. Send the fixed image to a server or local device (spreader, terminal or other controller) for analyzing the data;
4. (Either step 2. or 4.) Applying correction for perspective and scale based on the measurement tool 1 on a server device or the local device (e.g. the mobile device or the tablet);
5. Analyzing the images to determine bulk material characteristics like surface roughness, shape and particle diameter by either using conventional computer vision techniques or by using deep neural networks;
6. Return data indicative of the bulk material characteristics back to the mobile device or local device; and
7. Returning spreading chart advice in a software application based on the bulk material characteristics or setup the spreader machine automatically (e.g. without user input).

In the data processing system 4, a deep neural network (DNN) may be applied to process the digital image data. One or more of the characteristics of the bulk material determined may be assigned to useable physical properties (material parameters). One of the material parameters, namely the particle size or particle diameter, may be determined. For example, this can either be conducted by classifying the bulk material in certain categories, for example: fine (1mm), small (1.8mm), normal (2.5mm), large (3.5mm), very large (5mm+). Alternatively, the particle size can be determined by regressing the digital image data into just one average diameter(x mm).

The DNN may also be used to recognize at least one of the shape and the category of the bulk material such as fertilizer or seed. This is done with a classification regressor neural network. For each category of bulk material the DNN will return a number between 0 to 1 indicating how likely it is that the photographed bulk material is having a certain shape.

The DNN can be located on either a local information controller on an distribution machine such as a spreader, a local software application for a mobile phone or hosted in the cloud. The cloud may provide for the opportunity to collect digital image data from customers or users, these can be then be used to retrain the DNN so it keeps evolving.

The DNN may be hosted on the control device 4 on the agricultural spreader 1. If it is combined with a local advice service and database, the agricultural spreader 1 can setup itself completely automatic and offline. Continuously updating the settings depending on the current changed would become a possibility.

In the method disclosed, an image of a bulk material 2 is transformed onto a two-dimensional image plane using references (optical landmarks 7) such as ArUco landmarks with the purpose of determining properties of the bulk material 2, such as the diameter) of the particles. Such information can be applied for assisting correctly setting up a spreader machine. The transformation is to provide an image with a fixed scale on a flat two-dimensional plane where a computer vision algorithm or neural network can be applied for further processing.

The features disclosed in this specification, the figures and / or the claims may be material for the realization of various embodiments, taken in isolation or in various combinations thereof.

## Claims

1. A method for determining a bulk material such as fertilizer, seed or the like, comprising:
- providing a bulk material (2) to be distributed such as fertilizer, seed or the like by a distribution machine;
- providing a measurement tool (1) having an optical landmark (7) on a front side of the measurement tool (1);
- providing the measurement tool (1) in a measurement position in which the bulk material (2) is provided in proximity to the measurement tool (1);
- providing a camera device (3) configured to detect images;
- detecting image data by the camera device (3), the image data indicative of an image of the front side of the measurement tool (1) provided in the measurement position and the bulk material (2) provided in proximity to the measurement tool (1); and
- determining characteristics of the bulk material (2) from image data analysis of the image data, comprising, in one or more processors:
- determining the optical landmark (7) from the image data;
- in response to determining the optical landmark (7), providing dimensional data assigned to and indicative of dimensional characteristics of the optical landmark (7); and
- determining characteristics of the bulk material (2) taking into account the dimensional characteristics.

2. The method of claim 1, wherein the determining comprises determining dimensional characteristics of the bulk material (2).

3. The method of claim 1 or 2, wherein the determining comprises determining characteristics of particles of the bulk material (2).

4. The method of claim 3, wherein the determining comprises determining dimensional characteristics of the particles of the bulk material (2).

5. The method of at least one of the preceding claims, further comprising providing the bulk material (2) to be distributed in a container of a distribution machine.

6. The method of at least one of the preceding claims, further comprising providing a measurement tool (1) having an arrangement of optical landmarks (7) on an edge part (6) of the measurement tool (1).

7. The method of at least one of the preceding claims, further comprising
- providing a measurement tool (1) having an opening (5), wherein the arrangement of optical landmark (7) is provided on the edge part (6) encompassing the opening (5) at least in part; and
- the bulk material (2) provided on the back side of the measurement tool (1) occupying, in the image of the front side of the measurement tool (1), an image subarea assigned to the opening (5).

8. The method of claim 6 or 7, wherein the providing of the dimensional data comprises providing dimensional data indicative of landmark distance characteristics of the optical landmarks (7) from the arrangement of optical landmarks (7).

9. The method of 7 or 8, if referring to claim 7, wherein the providing of the dimensional data comprises providing dimensional data indicative of at least one of a size of the opening (5) and a diameter of the opening (5).

10. The method of at least one of the preceding claims, wherein the providing comprises providing a mobile device having the one or more processors and the camera device (3).

11. The method of at least one of the preceding claims, further comprising:
- providing a time of flight sensor device;
- detecting distance data while the image data are detected, the distance data being indicative of a distance between the camera device (3) and the measurement tool (1);
- in the one or more processors, determining the distance between the camera device (3) and the measurement tool (1) from the distance data; and
- determining the characteristics of the bulk material (2) taking into account the distance between the camera device (3) and the measurement tool (1) from the distance data.

12. A measurement system for determining a bulk material such as fertilizer, seed or the like, comprising
- a measurement tool (1);
- a camera device (3); and
- one or more processors;
the measurement system being configured to:
- provide the measurement tool (1) in a measurement position in which the bulk material (2) is provided in proximity to the measurement tool (1);
- detect image data by the camera device (3), the image data being indicative of an image of the measurement tool (1) in the measurement position and the bulk material (2) provided in proximity to the measurement tool (1); and
- in the one or more processors, determine characteristics of the bulk material (2) from image data analysis of the image data, wherein the one or more processors are configured to:
- determine the optical landmark (7) from the image data;
- in response to determining the optical landmark (7), provide dimensional data assigned to and indicative of dimensional characteristics of the optical landmark (7) ; and
- determine characteristics of the bulk material (2) taking into account the dimensional characteristics.

## Amended claims

### Amended claims in accordance with Rule 137(2) EPC.

1. A method for determining characteristics of particles of a bulk material such as fertilizer, seed or the like, comprising:
- providing a bulk material (2) of particles such as fertilizer, seed or the like for distribution by a distribution machine;
- providing a measurement tool (1) having an optical landmark (7) on a front side of the measurement tool (1);
- providing the measurement tool (1) in a measurement position in which the particles of the bulk material (2) are provided in proximity to the measurement tool (1);
- providing a camera device (3) configured to detect images;
- detecting image data by the camera device (3), the image data indicative of an image of the front side of the measurement tool (1) provided in the measurement position and the particles of the bulk material (2) provided in proximity to the measurement tool (1); and
- determining characteristics of the particles of the bulk material (2) from image data analysis of the image data, comprising, in one or more processors:
- determining the optical landmark (7) from the image data;
- in response to determining the optical landmark (7), providing dimensional data assigned to and indicative of dimensional characteristics of the optical landmark (7); and
- determining characteristics of the bulk material (2) taking into account the dimensional data.

2. The method of claim 1, wherein the determining of the characteristics of the particles of the bulk material (2) from image data analysis comprises determining dimensional characteristics of the bulk material (2).

3. The method of claim 1, wherein the determining of the characteristics of the particles of the bulk material (2) from image data analysis comprises determining dimensional characteristics of the particles of the bulk material (2).

4. The method of at least one of the preceding claims, further comprising providing the bulk material (2) to be distributed in a container of a distribution machine.

5. The method of at least one of the preceding claims, further comprising providing a measurement tool (1) having an arrangement of optical landmarks (7) on an edge part (6) of the measurement tool (1).

6. The method of at least one of the preceding claims, further comprising
- providing a measurement tool (1) having an opening (5), wherein the arrangement of optical landmarks (7) is provided on the edge part (6) encompassing the opening (5) at least in part; and
- the bulk material (2) provided on the back side of the measurement tool (1) occupying, in the image of the front side of the measurement tool (1), an image subarea assigned to the opening (5).

7. The method of claim 5 or 6, wherein the providing of the dimensional data comprises providing dimensional data indicative of landmark distance characteristics of the optical landmarks (7) from the arrangement of optical landmarks (7).

8. The method of 6 or 7, if referring to claim 6, wherein the providing of the dimensional data comprises providing dimensional data indicative of at least one of a size of the opening (5) and a diameter of the opening (5).

9. The method of at least one of the preceding claims, wherein the providing comprises providing a mobile device having the one or more processors and the camera device (3).

10. The method of at least one of the preceding claims, further comprising:
- providing a time of flight sensor device;
- detecting distance data while the image data are detected, the distance data being indicative of a distance between the camera device (3) and the measurement tool (1);
- in the one or more processors, determining the distance between the camera device (3) and the measurement tool (1) from the distance data; and
- determining the characteristics of the bulk material (2) taking into account the distance between the camera device (3) and the measurement tool (1) from the distance data.

11. A measurement system for determining characteristics of particles of a bulk material such as fertilizer, seed or the like, comprising
- a measurement tool (1);
- a camera device (3); and
- one or more processors;
the measurement system being configured to:
- provide the measurement tool (1) in a measurement position in which particles of a bulk material (2) are provided in proximity to the measurement tool (1);
- detect image data by the camera device (3), the image data being indicative of an image of the measurement tool (1) in the measurement position and the particles of the bulk material (2) provided in proximity to the measurement tool (1); and
- in the one or more processors, determine characteristics of the particles from the bulk material (2) from image data analysis of the image data, wherein the one or more processors are configured to:
- determine an optical landmark (7) from the image data;
- in response to determining the optical landmark (7), provide dimensional data assigned to and indicative of dimensional characteristics of the optical landmark (7); and
- determine characteristics of the bulk material (2) taking into account the dimensional data.
